# EUROPEAN PATENT APPLICATION

(11) **EP 4 741 200 A1**
(43) Date of publication of application: **13.05.2026**
(21) Application number: 25214729.3
(22) Date of filing: 10.11.2025
(51) Int. Cl.: B60K 6/36, B60K 6/387, B60K 6/48, B60K 6/547, B60W 50/12, F16H 61/22

(54) **A HYBRID PROPULSION UNIT WITH TRANSMISSION AND A MOTORCYCLE COMPRISING THE PROPULSION UNIT**

(30) Priority: 11.11.2024 IT 202400025380
(71) Applicant: Piaggio & C. S.P.A., 56025 Pontedera Pisa (IT)
(72) Inventor: MARIOTTI, Walter, 56025 Pontedera (PI) (IT)
(74) Representative: Mannucci, Michele

(57) **Abstract**

The hybrid propulsion unit (13) according to the invention comprises an internal combustion engine (15); an electric motor/generator (41) and a transmission (19) to transmit power and torque to a drive wheel (3). A clutch (33) is also provided, adapted to cut off a power route between the internal combustion engine (15) and the input shaft (21) of the transmission (19), a well as a mechanical connection (31) from the output shaft (23) of the transmission (19) to the drive wheel (3). The electric motor/generator (41) and the input shaft (21) of the transmission (19) are connected to each other via a mechanical connection configured to transmit power between the electric motor/generator (41) and the input shaft (21) of the transmission (19) under any operating condition of the hybrid propulsion unit (13). A shift mechanism allows to mechanically couple an output of the clutch (33) to the input shaft (21) of the transmission (19) when the hybrid propulsion unit (13) operates in hybrid mode, and to mechanically decouple the output of the clutch (33) from the input shaft (21) of the transmission (19) when the hybrid propulsion unit (13) operates in electric mode. The shift mechanism is functionally coupled to a locking device (93) adapted to lock the transmission (19) in a fixed gear ratio when the hybrid propulsion unit (13) operates in electric mode.

## Description

### TECHNICAL FIELD

The present invention relates to improvements to the hybrid propulsion units, especially for motorcycles, i.e. saddle motor vehicles.

### BACKGROUND ART

To mitigate environmental pollution caused by exhaust gas emissions from internal combustion engines, hybrid vehicles have been developed that combine at least one electric motor and at least one internal combustion engine to supply power to the drive wheel(s) of the vehicle. Typically, a control unit modulates the power supplied by the internal combustion engine and by the electric motor, based on the driving conditions that have been set and according to a program aiming at reducing the production of combustion gases. The electric motor is a reversible motor, which allows mechanical power to be converted into electrical power to recharge an accumulator. This occurs, for example, during braking, or when the vehicle is advancing downhill.

A hybrid vehicle, specifically a hybrid motorcycle, is disclosed in EP3604013. This motorcycle comprises a transmission with a primary shaft, i.e. an input shaft, into which power is supplied from an internal combustion engine, and a secondary shaft, i.e. an output shaft, connected to the drive wheel of the motorcycle. Between the internal combustion engine and the primary shaft of the transmission a clutch is provided, which cuts off the power route between the internal combustion engine and the primary shaft, for example to allow gear shifting. The electric motor is connected to the secondary shaft of the transmission, i.e. the motion output shaft, via a gear train.

The DE102019316617 discloses a hybrid transmission for a motor vehicle.

US2020/0189566 discloses a hybrid transmission for a motorcycle.

The current systems for transmitting torque and power from an arrangement comprising an internal combustion engine and an electric motor have some limitations, which it is desirable to overcome.

### SUMMARY OF THE INVENTION

The present invention relates to a hybrid propulsion unit comprising: an internal combustion engine; an electric motor/generator; a transmission comprising an input shaft, adapted to receive power from the electric motor/generator and the internal combustion engine, and an output shaft, adapted to transmit power to a drive wheel; a clutch, adapted to cut off a power route between the internal combustion engine and the input shaft of the transmission; a mechanical connection from the output shaft of the transmission to the drive wheel.

According to the invention, the electric motor/generator and the input shaft of the transmission are connected to each other via a mechanical connection configured to transmit power between the electric motor/generator and the input shaft of the transmission under any operating condition of the propulsion unit. Moreover, between the clutch and the input shaft of the transmission a shift mechanism is provided, configured to: (a) mechanically couple a clutch output to the input shaft of the transmission when the propulsion unit operates in hybrid mode; and (b) mechanically decouple the clutch output from the input shaft of the transmission when the propulsion unit operates in electric mode.

In the following, the terms "electric motor," "electric motor/generator," and "electric machine" will be used interchangeably to indicate the same component of the propulsion unit, i.e. the machine that converts electric power to mechanical power supplied to the transmission of the propulsion unit.

Essentially, according to the present invention, the electric machine, i.e. the electric motor, always meshes the input shaft of the transmission and always transmits torque and power to the input shaft of the transmission and, through the transmission, to the drive wheel, regardless of the selected operating mode: purely electric or hybrid mode. Conversely, the power, and thus the torque, generated by the heat engine, i.e. the internal combustion engine, is transmitted to the input shaft of the transmission only when the vehicle operates in hybrid mode. In purely electric mode, the shift mechanism mechanically separates the clutch output from the input shaft of the transmission, thereby isolating the internal combustion engine from the transmission and allowing operation in pure electric mode (i.e. with power and torque provided only by the electric motor).

This configuration differs substantially from the prior art, for instance from the system disclosed in EP3604013, where the electric machine, i.e. the electric motor, supplies torque, and thus power, directly to the output shaft, i.e. the secondary shaft of the transmission, instead of to the primary shaft. Compared with this solution of the prior art, the hybrid propulsion unit of the present invention has significant advantages.

In particular, if the motion of the electric motor is transmitted to the secondary shaft, i.e. the output shaft of the transmission, via a gear train, as disclosed in EP3604013, it is necessary for the propulsion unit to have a series of additional components, which perform the same function as other components already provided in the propulsion unit, resulting in an increase in the cost and weight of the propulsion unit.

Moreover, transmitting the motion from the electric motor to the secondary shaft. Rather than to the primary shaft of the transmission, does not allow the use of the gear ratios along the transmission of torque from the electric motor. Conversely, if torque and power are transmitted from the electric motor to the primary shaft of the transmission, as provided in the propulsion unit of the present invention, one or more gear ratios can be used.

When the electric motor is arranged to transmit torque to the primary shaft of the transmission, as in the present invention, instead of the secondary shaft, the electric motor can be used to control the revolutions of the primary shaft and bring them closer to synchrony with the input motion, that is, with the revolutions of the drive shaft of the internal combustion engine. This allows to facilitate gear shifts and to limit torque gaps resulting from clutch disengagement.

In addition, transmitting torque from the electric machine to the secondary shaft of the transmission also means operating on an axis where fewer revolutions and higher torque are required. This results in the need to use a larger electric motor than that required in the case where the torque from the electric motor is transmitted to the transmission through the primary shaft. Therefore, with the configuration according to the present invention, given equal overall performance, a smaller electric motor can be used than that required in the prior art propulsion unit.

Further advantageous characteristics and embodiments of the hybrid propulsion unit of the invention will be described below with reference to the attached drawing, and are defined in the attached claims.

### BRIEF DESCRIPTION OF THE DRAWINGS

The invention will be better understood from the following description and the attached drawings, which illustrate an exemplary non-limiting embodiment of the invention. More particularly, in the drawings:
Fig. 1 is a schematic side view of a motorcycle, onto which a hybrid motorization according to the present invention can be installed;
Fig. 2 is a simplified diagram of the hybrid propulsion unit of the present invention;
Figs. 3A, 3B show two operating conditions of the hybrid propulsion unit;
Figs. 4 and 5 show two axonometric views of the propulsion unit, from two different points of observation;
Fig. 6 is a view similar to that of Fig. 5, with some parts removed;
Fig. 7 shows a detail of the starter motor of the internal combustion engine;
Fig. 8 is an axonometric view of the transmission and the shift mechanism that controls the movement of the engaging member of the transmission from the internal combustion engine to the input shaft of the transmission;
Fig. 9 shows a view similar to that of Fig. 8, in cross-section;
Fig. 10 shows an enlargement of the transmission and the transmission locking device;
Fig. 11 is a side view of the transmission with the starter motor and the transmission locking device; and
Figs. 12 and 13 are cross-sectional views of the input shaft of the transmission and the shift mechanism in two distinct operating positions of the motorcycle, i.e. in electric operation mode and hybrid operation mode, respectively.

### DETAILED DESCRIPTION

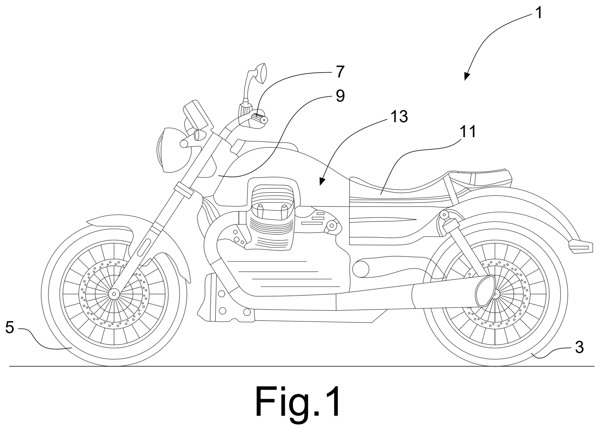

Fig. 1 shows schematically a motorcycle 1, on which a hybrid propulsion unit according to the present description can be mounted, the hybrid propulsion unit comprising an internal combustion engine, typically a reciprocating internal combustion engine, a transmission, a reversible electric motor, i.e. A motor capable of functioning as a generator to convert mechanical power to electric power, and an electrical energy accumulator. The motorcycle 1 generally comprises at least one rear drive wheel 3, and at least one front steering wheel 5, connected to a steering 7. The reference number 9 indicates the frame, number 11 indicates the saddle, and number 13 generically indicates the hybrid propulsion unit, comprising a plurality of components detailed below with reference to the attached drawings.

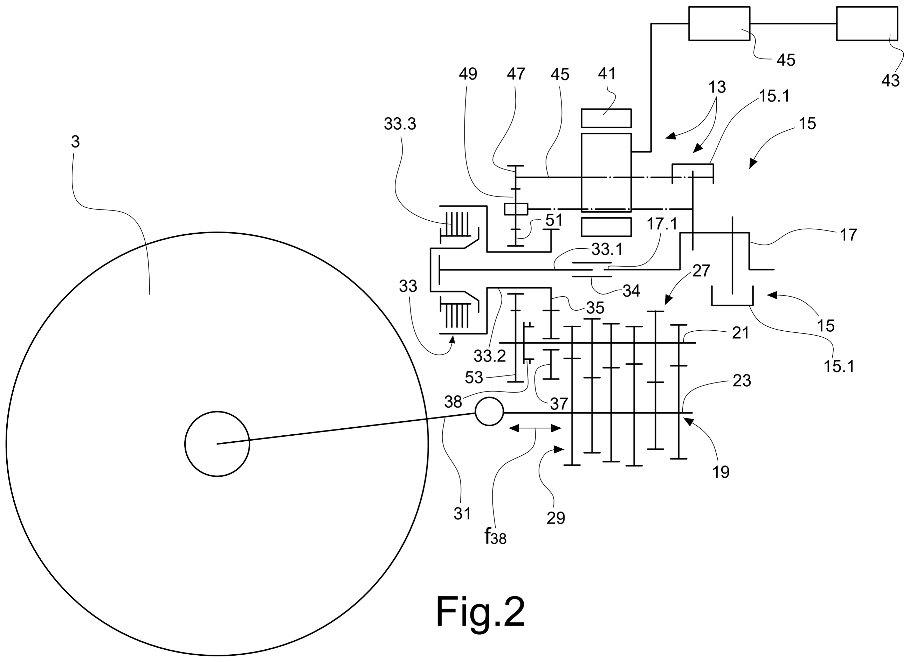

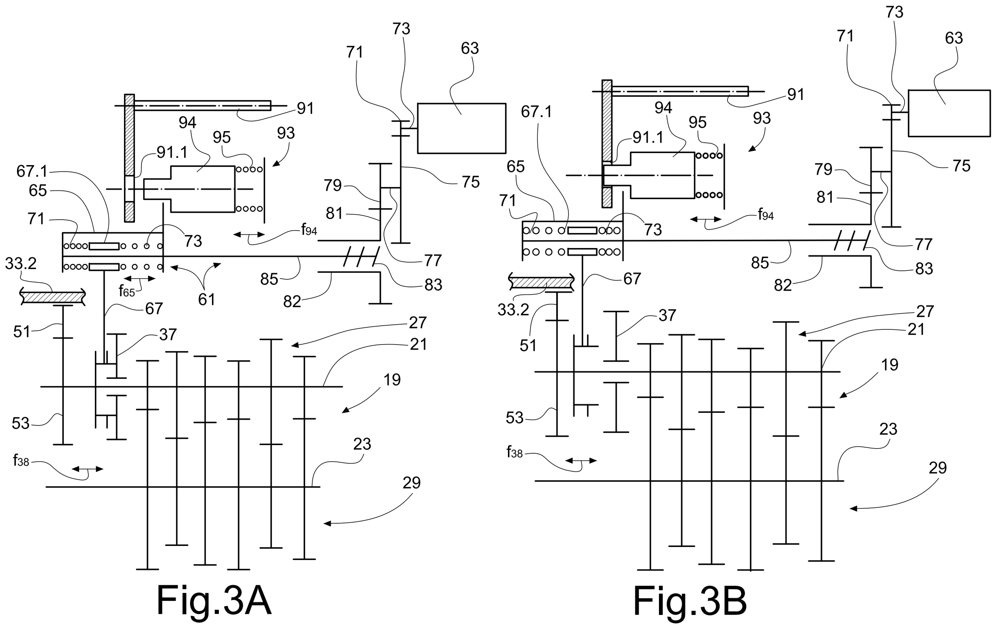

Fig. 2 and Figs. 3A, 3B show diagrams of the hybrid propulsion unit according to the present invention. Specifically, each of Figs. 3A, 3B shows the components (not shown in Fig. 2) that switch the hybrid propulsion unit from a hybrid operation mode, where both the internal combustion engine and the electric motor operate to supply power to the drive wheel 3, to a purely electric operation mode, where the internal combustion engine is inactive and power is delivered to the drive wheel 3 exclusively by the electric motor. In both operation modes, the electric motor can selectively function as a generator, when mechanical power is available from the drive wheel 3, for example during braking or when the vehicle is advancing downhill.

The main elements and the general operating principle of the hybrid propulsion unit 13 are initially described with reference to the diagrams in Figs. 2, 3A, 3B. Then, a more detailed description of a construction form of the hybrid propulsion unit 13 will be provided with reference to the next figures.

With initial reference to Fig. 2, the hybrid propulsion unit 13 comprises a reciprocating internal combustion engine 15, for example a gasoline engine. In the diagram in Fig. 2, only two pistons 15.1 of the internal combustion engine are shown, and the reference number 17 indicates the crankshaft of the internal combustion engine 15 that converts the reciprocating motion of the pistons 15.1 of the internal combustion engine 15 to rotary motion.

The hybrid propulsion unit 13 also comprises a transmission 19. In the illustrated embodiment, the transmission 19 is a six-speed gearbox , that is with six gear ratios. However, it should be understood that the transmission may be different from that shown, for example with more or fewer gear ratios. The features of the gearbox are not relevant for the purposes of the present invention, as the features of the propulsion unit described herein can apply to various types of transmissions. Just by way of example, the transmission gearbox can be configured as disclosed in EP3601844.

The transmission 19 comprises a motion input shaft, i.e. a primary shaft, 21, and a motion output shaft, i.e. a secondary shaft, 23. In the following, the shafts 21 and 23 will be briefly referred to as "input shaft" 21 and "output shaft" 23. Gears 27 are mounted on the input shaft 21 and gears 29 are mounted on the output shaft 23. Each gear 27 meshes with a corresponding gear 29. The gear pairs (six in the example schematically shown in Fig. 2) define six distinct gear ratios between the input shaft 21 and the output shaft 23. As well known, by acting on the gears connected to the input shaft 21 and the output shaft 23, the rider of the motorcycle 1 can shift gears. The transmission 19 can be manual. However, the transmission 19 can be even automatic; in this case, the rider acts only on the throttle, and an electronic control unit switches between the various gear ratios depending on the driving conditions and the rider's demand for power.

One end of the output shaft 23 is mechanically connected to the rear drive wheel 3 via a mechanical connection 31. The mechanical connection 31 may comprise, for example, a drive shaft, a continuous flexible transmission member, such as a belt or chain, or other appropriate mechanical members not shown in detail. In the diagram in Fig. 2, the drive wheel 3 is shown with its rotation axis orthogonal to the axes of the input shaft 21 and the output shaft 23 of the transmission 19. This is only for the sake of simplicity of the drawings, and it should be understood that in general on a motorcycle the axes of the input shaft 21 and the output shaft 23 of the transmission 19 are parallel to each other and to the rotation axis of the drive wheel 3.

The crankshaft 17 of the internal combustion engine 15 is connected to the input shaft 21 of the transmission 19 by a clutch 33, which is mechanically interposed between an end 17.1 of the crankshaft 17 and the input shaft 21. The clutch 33 is adapted to cut off a power route, i.e. a torque transmission, between the internal combustion engine 15 and the input shaft 21 of the transmission 19.

The clutch 33 can be connected to the crankshaft 17 by means of a torsional coupling 34, interposed between an input 33.1 of the clutch and the end 17.1 of the crankshaft 17. The reference number 33.2 indicates an output shaft of the clutch 33, which is mechanically connected to the input shaft 21 of the transmission 19 in the manner described below. In the illustrated embodiment, the input and the output of the clutch 33 are on the same side of the clutch. The reference number 33.3 indicates clutch discs that connect (and selectively disconnect) the input 33.1 and the output shaft 33.2 of the clutch with (from) each other.

The reference number 35 indicates an output gearwheel of the clutch 33, and 37 indicates a gearwheel supported idle on the input shaft 21 of the transmission 19 and meshing with the gearwheel 35. As it will be described below, the gearwheel 37 can be made angularly integral with the input shaft 21 of the transmission 19 when the motorcycle 1 operates in hybrid mode. In this operating mode, the gearwheel 37 rotates integrally with the input shaft 21 of the transmission 19. Through the pair of gearwheels 35, 37, the motion is thus transmitted from the clutch 33 to the input shaft 21 of the transmission 19 and through the latter (through one of the pairs of gears 27, 29, depending on the selected gear) to the output shaft 23 of the transmission 19.

Conversely, when the motorcycle operates in pure electric mode, the gearwheel 37 remains idle with respect to the input shaft 21 of the transmission 19. The two operating modes (hybrid and pure electric) will be described in more detail below.

Through a control member (not shown in Fig. 2), the clutch 33 can be selectively opened, to interrupt the power route between the internal combustion engine 15 and the input shaft 21 of the transmission 19, when the gearwheel 37 rotates integrally with the input shaft 21. This allows the rider (or the control system of the transmission 19 if the transmission is automatic) to shift gears in the hybrid operating mode, that is, with the internal combustion engine 15 supplying power to the drive wheel 3 through the transmission 19.

In order to make the gearwheel 37 angularly integral with the input shaft 21 of the transmission 19, and thus to transmit power from the internal combustion engine 15 to the input shaft 21, an engaging member 38 is provided, angularly integral with the input shaft 21, i.e. torsionally coupled to the input shaft 21 to rotate therewith, but axially slidable along the input shaft 21 by means of a control member that will be described below with reference to Figs. 3A, 3B. The axial movement of the engaging member 38 is indicated by the double arrow f38. The engaging member 38 is adapted to be mechanically coupled to the gearwheel 37, so that, by moving the engaging member 38 towards the gearwheel 37, these two members mechanically connect with each other, so that the gearwheel 37 can transmit power from the clutch 33 to the engaging member 38 and thus to the input shaft 21 of the transmission 19, with which the engaging member 38 is torsionally integral. The angular, i.e. torsional, coupling between the gearwheel 37 and the engaging member 38 can be achieved, for example, by a set of front teeth or other equivalent members.

The hybrid propulsion unit 13 also comprises an electric machine 41, specifically a reversible electric motor, i.e. an electric motor/generator capable of working in motor mode to convert electrical power to mechanical power, and in generator mode to convert mechanical power to electrical power. The motor/generator 41 (hereafter referred to briefly as "electric motor" 41), exchanges electrical energy with an accumulator 43, to which it is connected via an inverter 45.

The electric motor 41 is mechanically connected to the input shaft 21 of the transmission 19 by means of an adequate mechanical connection. In the illustrated embodiment, the mechanical connection between the electric motor 41 and the input shaft 21 of the transmission 19 is achieved by a gear train. It is also possible to use a different connecting mechanism, for example pulleys and flexible members, such as belts or chains. In the illustrated embodiment, the electric motor 41 comprises an output shaft 45, onto which a first gear 47 is keyed, which meshes with a second gear 49, supported idle on a transmission shaft 16. The second gear 49 meshes with a third gear 51, coaxial with the clutch 33 and the crankshaft 17. The third gear 51 can be supported idle on the output shaft 33.2 of the clutch 33. The third gear 51 meshes with a fourth gear 53, which is keyed onto the input shaft 21 of the transmission 19, i.e. angularly coupled to the input shaft 21.

The gears 47, 49, 51, and 53 form a gear train that transmits motion from the electric motor 41 to the input shaft 21 of the transmission 19 at an appropriate gear ratio. Since the gear train 47, 49, 51, and 53 always meshes with the input shaft 21 of the transmission 19, whether in hybrid mode or pure electric mode, the electric motor 41 is configured to always exchange mechanical power with the transmission 19 and thus with the drive wheel 3. The power normally flows from the electric motor 41 to the drive wheel 3 and is supplied by the energy stored in the accumulator 43. However, under certain operating conditions, the flow of power can be reversed, i.e. from the drive wheel 3 (or even from the internal combustion engine 13) to the electric motor 41 that, in this case, acts as a generator and converts the mechanical power input to electrical power output, which is conveyed to the accumulator 43.

Figs. 3A, 3B schematically show an actuation system 61, adapted to control the movement of the engaging member 38, the actuation system being omitted in Fig. 2 for the sake of practicality of representation. Conversely, in Figs. 3A, 3B the internal combustion engine 13, the clutch 33, the electric motor 41, and part of the gear train 47, 49, 51, 53 that transmits motion from the electric motor 41 to the input shaft 21 of the transmission 19, are omitted.

The actuation system 61 forms, with the engaging member 38 and the gearwheel 37, a shift mechanism configured: to mechanically couple the clutch output 33.2 to the input shaft 21 of the transmission 19, when the motorcycle operates in hybrid mode; to mechanically decouple the output 33.2 of the clutch 33 from the input shaft 21 of the transmission 19 when the motorcycle 1 operates in electric mode.

The actuation system 61 comprises an actuator 63, for example, an electronically controlled electric motor, which is mechanically connected to an actuator 65, hereafter referred to as movable element 65, which engages, for example via a fork 67, the engaging member 38. By means of the actuator 63, a translation movement according to the double arrow f65 is imparted to the movable element 65. The translation movement of the movable element 65 is transmitted to the engaging member 38 via the fork 67, so that, essentially, the angular engagement and disengagement movement of the gearwheel 37 with respect to the input shaft 21 of the transmission 19 is controlled by the actuator 63.

In the illustrated embodiment, the connection between the actuator 63 and the movable element 65 is achieved by a gear train, comprising a first gear 72, keyed onto an output shaft 74 of the actuator 63. The first gear 72 meshes with a second gear 75 rotatable integrally with a third gear 79, meshing with a fourth gear 81. The reference number 77 indicates a shaft, on which the gears 75 and 79 can be supported. The gear 79 is integral with a nut screw 82, into which a threaded rod 83 engages, formed by the end portion of a shaft 85. The opposite end of the shaft 85 is integral with the movable element 65. Advantageously, to make the engagement between the engaging member 38 and the gearwheel 37 more smooth, an elastic connection is provided between the movable member 65 and the fork 67, instead of a rigid one. In the illustrated embodiment, this connection consists of compression springs 71, 73. The movement of the movable element 65 loads one or the other of the compression springs 71, 73, which generate thrusts, in one direction or the other, on the fork 67 that, to this end, is mounted on the shaft 85 via a slidable sleeve 67.1. In this way, the front engagement between the engaging member 38 and the gearwheel 37 occurs when a full-tooth alignment between the respective gear profiles is achieved, as detailed below.

Fig.3A shows the arrangement of the shift mechanism when the motorcycle 1 operates in hybrid mode. As mentioned above, in this mode, the drive wheel 3 is mechanically connected to both the electric motor 41, via the gear train 47, 49, 51, 53, and the internal combustion engine 15, via the clutch 33. This requires the gearwheel 37 to be angularly, i.e. torsionally, coupled to the input shaft 21 of the transmission 19. This coupling is achieved through the engaging member 38 that, in this configuration, is mechanically coupled to the gearwheel 37.

In Fig.3B, the motorcycle 1 operates in pure electric mode, i.e. the drive wheel 3 receives power (or delivers power) only from (to) the electric motor 41, while the internal combustion engine 15 is disconnected from the input shaft 21 of the transmission 19. To this end, the engaging member 38 is spaced from the gearwheel 37; therefore, the gearwheel 37 does not transmit torque and power between the the clutch 33 and the transmission 19. In this condition, the internal combustion engine 15 can be turned off, the clutch 33 does not rotate and the gearwheel 37 remains stationary while the input shaft 21 of the transmission 19 is kept rotating by the electric motor 41.

When the motorcycle 1 operates in hybrid mode, the rider can shift the gear ratio as in a conventional motorcycle equipped with only the internal combustion engine. If the transmission 19 is manual, a gear selector may be provided to shift gears, i.e. gear ratio. The gear selector may comprise a pedal or a lever. The gear selector is schematically indicated in Figs. 3A, 3B with the reference number 91. Alternatively, the transmission can be manual; in this case, the motorcycle control unit shifts gears based on data from appropriate sensors and possibly based on the type of riding selected by the rider.

When the motorcycle 1 operates in pure electric mode (Fig. 3B), it is appropriate that the transmission 19 remains in a fixed position, i.e. no gear shifting can be performed. For example, the transmission 19 can be locked in a low or intermediate gear ratio (second or third gear). If the transmission is automatic, the locking of the transmission in the appropriate gear ratio is done by the control unit, which prevents gear shifting. Conversely, if the transmission is manual, as in the illustrated example, the shift mechanism may comprise a mechanical locking device for the gear selector 91 to lock the transmission 19 in the appropriate gear ratio for the motorcycle 1 to operate in purely electric mode.

In the illustrated embodiment, the locking device, indicated with the reference number 93, comprises a slider 94 elastically stressed by an elastic member 95, for example a compression spring, and constrained to the movable element or actuator 65. In this way, the movement of the movable element or actuator 65 causes actuation of the slider 94, which co-acts with the gear selector 91, for example being inserted into a hole 91.1 of the gear selector 91, preventing the rotation of the gear selector and thus the shifting of the gear ratio.

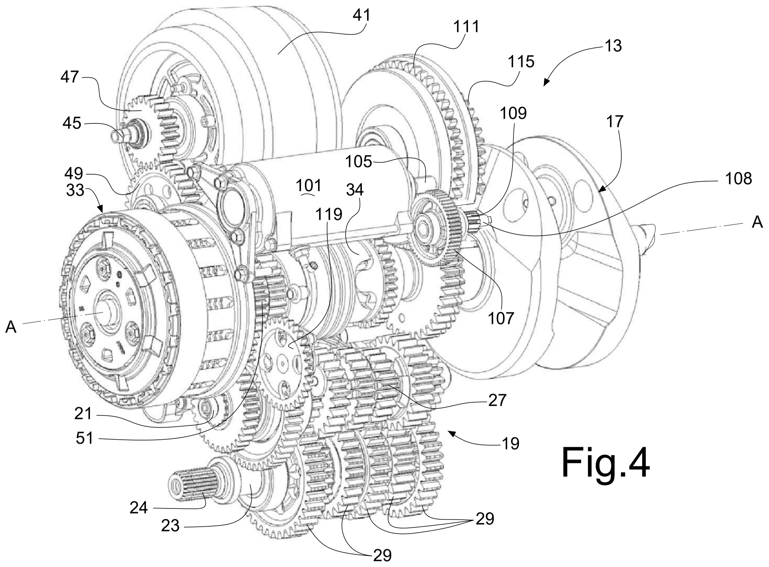

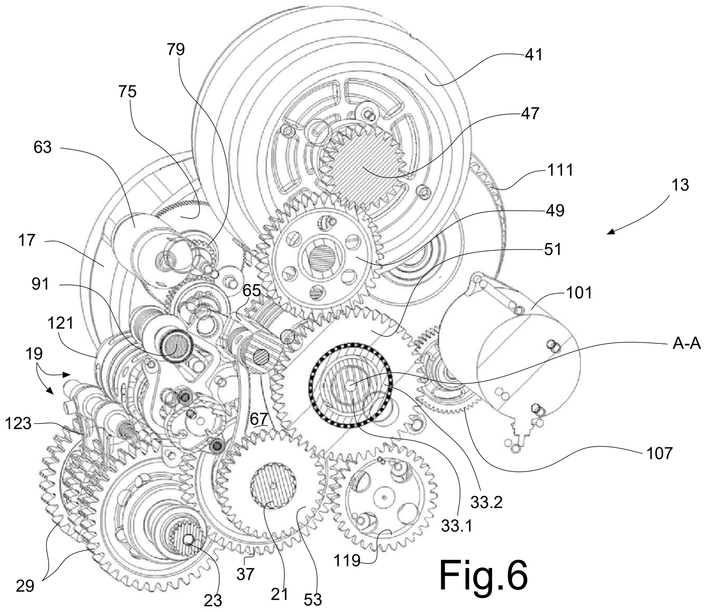

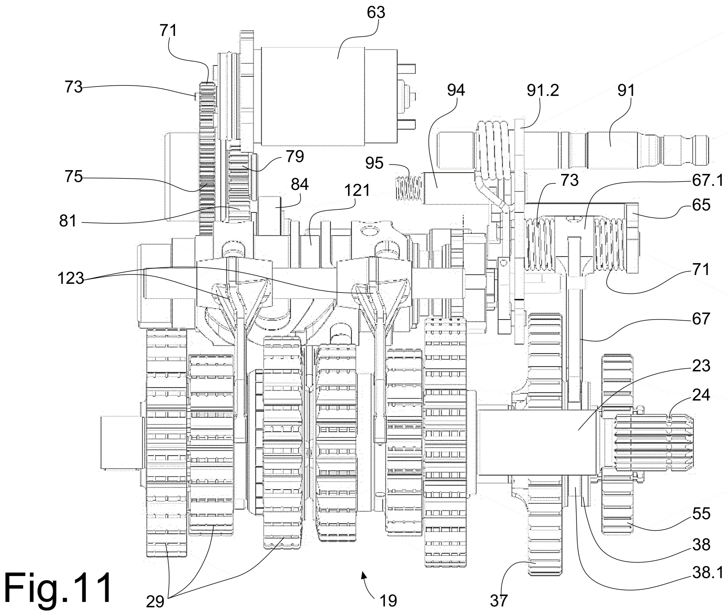

While Figs. 2, 3A, 3B show the hybrid propulsion unit and the accessory parts thereof in the form of a simplified diagram to understand the operating principle, the subsequent Figs. 4 to 13 show a practical embodiment thereof.

In particular, Figs. 4, 5 and 6 show the assembly of the hybrid propulsion unit 13. These figures show the crankshaft 17, the transmission 19, the input shaft 21 of the transmission 19, the output shaft 23 of the transmission 19, the gears 27 mounted onto the input shaft 21, and the gears 29 mounted onto the output shaft 23. The reference number 24 indicates a grooved profile, which is formed at one end of the output shaft 23 and through which motion is transmitted to the drive wheel 3. For this purpose, a chain wheel can be coupled to the grooved profile 24.

Figs. 4, 5, and 6 also show the electric motor 41 and the gear train 47, 49, 51, 53 that transmit motion from the electric motor 41 to the input shaft 21 of the transmission 19.

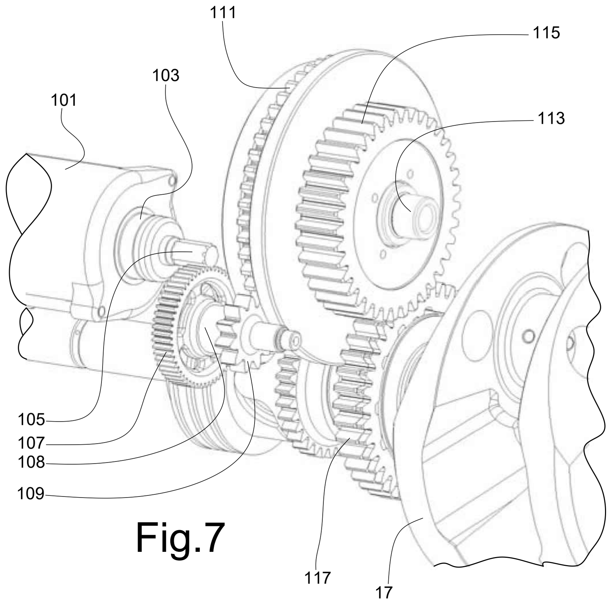

Figs. 4, 5, and 6 also show an electric starter motor 101 for the internal combustion engine 15, omitted in the diagrams of Figs. 2, 3A, 3B. The electric starter motor 101 is also shown in Fig. 7, separate from the other elements of the hybrid propulsion unit 13. Fig. 7 also clearly shows the elements for transmitting motion from the starter motor 101 to the crankshaft 17. These elements constitute a gear train comprising a first gear 105 keyed onto the output shaft 103 of the electric starter motor 101 or made in a single piece therewith. The first gear 105 meshes with a second gear 107, keyed onto an intermediate shaft 108, onto which a third gear 109 is keyed, which meshes with a fourth gear 111. The fourth gear is keyed onto an additional intermediate shaft 113, onto which a fifth gear 115 is keyed, meshing with a sixth gear 117, keyed onto the crankshaft 17.

Figs. 4, 5, 6 also show a gear 119, which meshes with the gear 51 and takes motion therefrom, to actuate an oil pump, not shown.

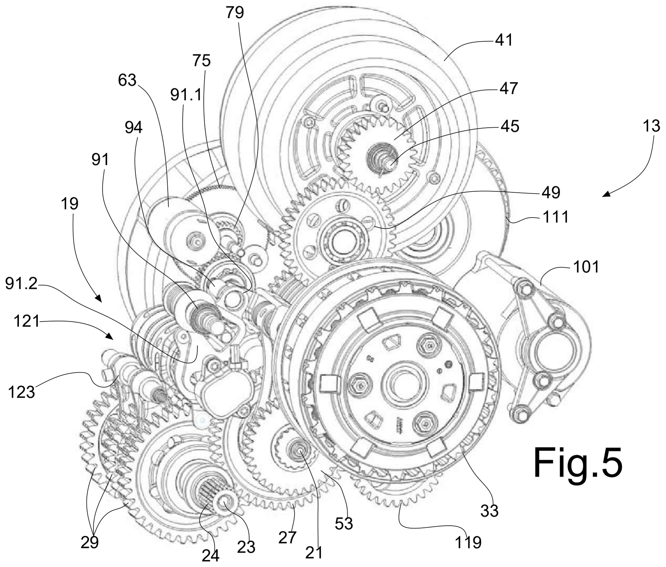

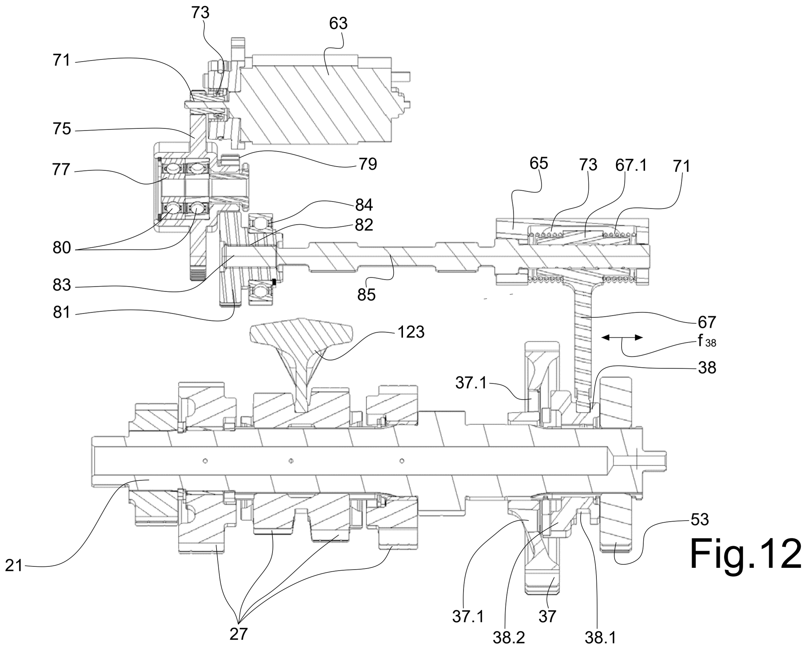

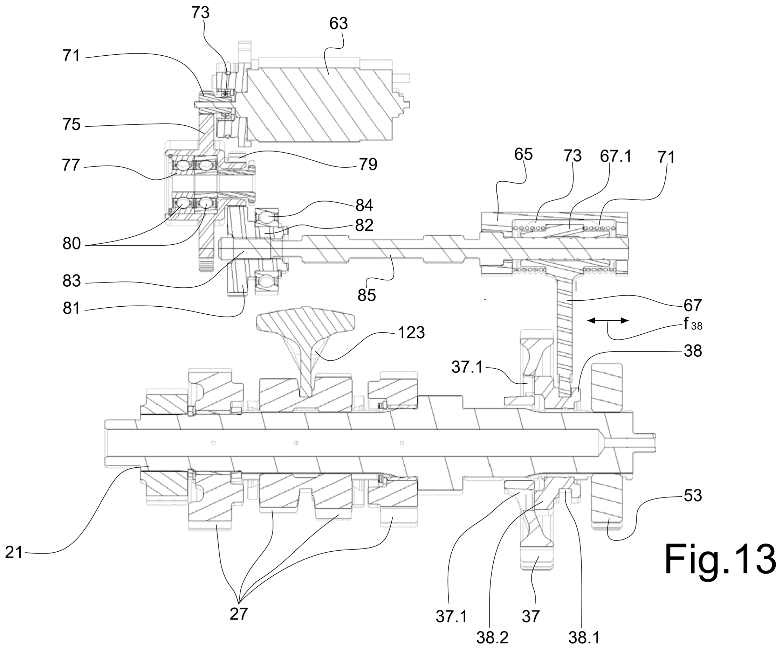

Figs. 5, 6, 8, 9, and 10 also show in detail a constructive form of the shift mechanism to couple and to decouple the output 33.2 of the clutch 33 to/from the input shaft 21 of the transmission 19. Figs. 12 and 13 show the actuation system 61 separate from the other components of the hybrid propulsion unit 13 in the two positions: the pure electric mode condition is shown in Fig. 12, and the hybrid mode condition is shown in Fig. 13.

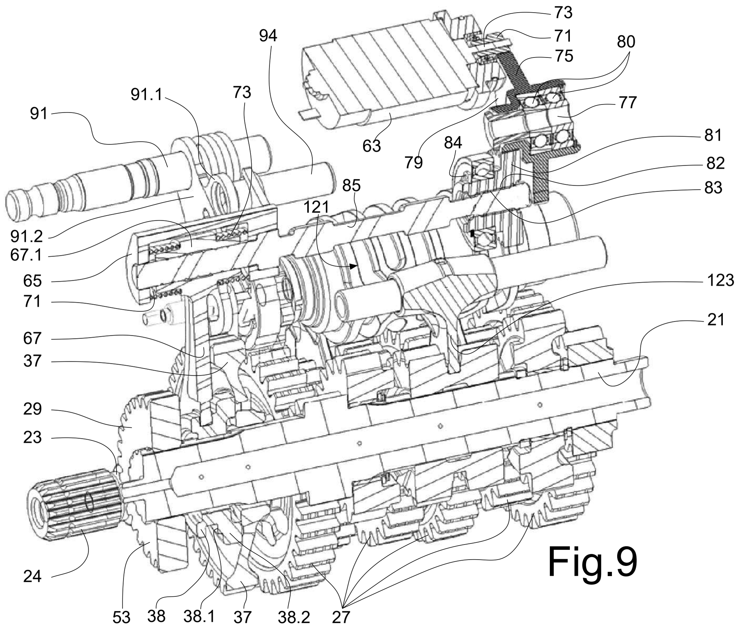

Specifically, Figs. 5, 6, 8, 9, 10, 12, and 13 show the actuator 63, in the form of an electric motor, with the output shaft 74, onto which the first gear 72 of the gear train actuating the fork 67 is keyed. In particular, Fig. 9 shows the second gear 75, with which the first gear 72 meshes. In this embodiment, the gear 75 is made in a single piece with the gear 79 and the body forming the two gears 75, 79 is supported idle, through bearings 80, on a support shaft 77. In other embodiments, the elements 75, 77, 79 are integral with one another and supported by bearings that support the rotating shaft 77.

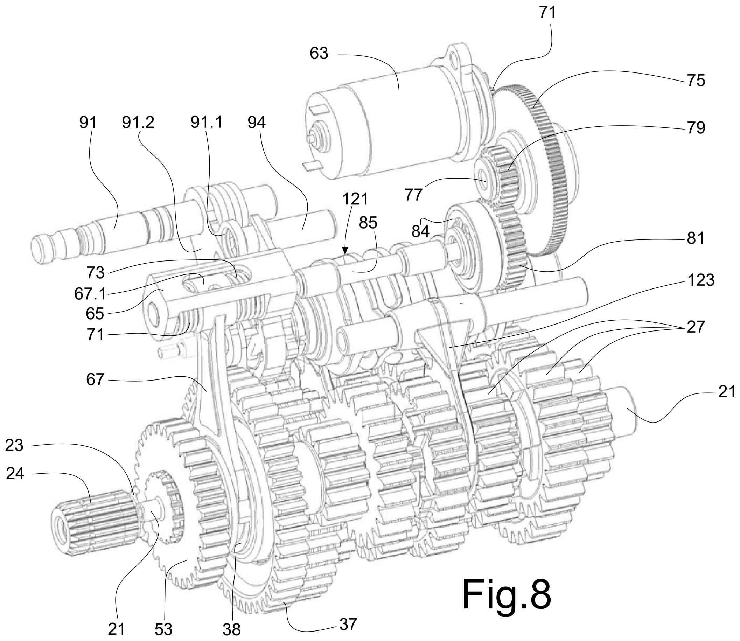

Figs. 8, 9, 10, 12, and 13 show, in particular, the gear 81, with which the gear 79 meshes and which forms a single body with the nut screw 82. As described above, the nut screw engages the threaded rod 83 consisting of the end portion of the shaft 85. The reference number 84 indicates a bearing that supports the body forming the gear 79 and the nut screw 82.

Figs. 8, 9, 10, 12, and 13 also show in detail the movable element 65, integral with the end of the shaft 85 opposite the threaded rod 83. In the illustrated embodiment, the movable element 65 is made with an internal cavity, through which the shaft 85 extends. On the shaft 85, the slidable sleeve 67.1 is mounted , which can move relative to the movable element 65 in a direction parallel to the axis of the shaft 85. The two springs 71, 73, in the example two helical compression springs, are mounted at the two sides of the slidable sleeve 67.1. With this arrangement, the axial movement (parallel to the axis of the shaft 85) of the movable element 65 is transmitted to the sleeve 67.1 through the springs 71, 73. Consequently, if a resisting force acts on the fork 67, which is integral with the sleeve 67.1 (for reasons explained below), this resisting force does not prevent the movement of the movable element 65, but gradually increases the thrust on the sleeve 67.1 as one or the other of the two springs 71, 73 is progressively compressed.

The sectional axonometric view of Fig. 9 and the cross-sections of Figs. 12 and 13 show in detail the actuation of the engaging member 38 selectively to connect angularly the gearwheel 37 to the input shaft 21 of the transmission 19, and to disconnect angularly the gearwheel 37 from the input shaft 21, depending on the drive mode (hybrid or pure electric) that the rider selects.

Specifically, the engaging member 38 comprises an annular groove 38.1, where the fork 67 engages. The engaging member 38 has, on a face facing the gearwheel 37, front teeth 38.2, configured to engage in holes 37.1 made in the gearwheel 37. In Fig. 12 the engaging member 38 is kept axially spaced from the gearwheel 37. The teeth 38.2 thereof do not engage the holes 37.1 of the gearwheel 37, and the gearwheel is therefore idle with respect to the input shaft 21 of the transmission 19. This condition corresponds to that schematically illustrated in Fig. 3B. In Fig. 13, the engaging member 38 is moved axially toward the gearwheel 37 to engage the teeth 38.2 in the holes 37.1. The arrow f38 in Figs. 12 and 13 indicates the movement of the engaging member 38 controlled by the actuator 63, as also shown in Figs. 3A, 3B. Since the mutual angular position of the holes 37.1 and the teeth 38.2 is random, it may happen that, when the engaging member 38 is pushed by the fork 67 toward the gearwheel 37, the teeth 38.2 are not angularly aligned with the holes 37.1. This initially prevents the penetration of the teeth 38.2 into the holes 37.1. The presence of the spring system 71, 73 allows the movable element 65 to perform its axial travel under the control of the actuator 63 even if such a condition occurs, i.e. if the axial movement of the engaging member 38 is initially prevented. In this condition, the thrust generated by the movable element 65 compresses the spring 73, thus generating a thrust onto the sleeve 67.1 and consequently the fork 67 and the engaging member 38. Since the sleeve 38 rotates integrally with the input shaft 21, while the gearwheel 37 is idle, at some point the holes 37.1 will be aligned with the front teeth 38.2 and consequently the front teeth will engage in the holes, under the thrust of the spring 73. The spring 71 counterbalances the force of the spring 73 to keep, under normal conditions, the sleeve 67.1 in an intermediate position along the movable element 65.

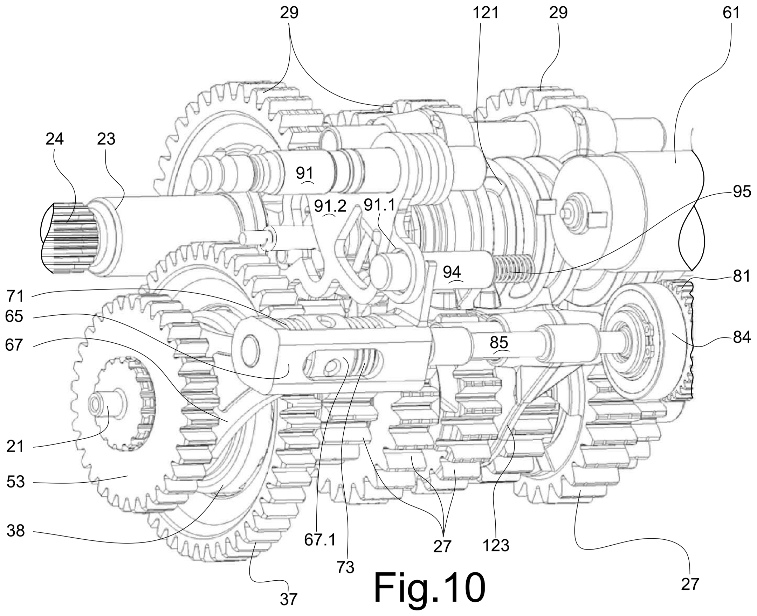

Figs. 9 and 10 show in particular an embodiment of the slider 94 that engages in the hole 91.1 formed in a plate 91.2 integral with the gear selector 91. The slider 94 is integral with the movable element 65 and moves therewith. As described above, when the movable element 65, and consequently the fork 67 and the engaging member 38, move to the disengaged position (operation in pure electric mode) shown in Figs. 3B, 12, the slider 94 enters the hole 91.1. The operation to be done before selecting the purely electric drive mode is to move the gear selector 91 to the chosen position, for example the second or third gear, a position that is defined at the stage of design of the hybrid propulsion unit 13. If the rider does not engage the correct gear, the motorcycle cannot be switched to the pure electric mode because the slider 94 hits the plate 91.2 and cannot enter the hole 91.1. This prevents the rider from shifting to the pure electric mode when in an incorrect gear.

If the transmission is automatic, these functions, which are performed here by mechanical members, can be carried out by an electronic control.

Figs. 4 to 13 also show other (known) components of the transmission 19, specifically the components that allow to shift gears. Specifically, the figures show a group of cams 121 and forks 123 that control the movements of the gears 27, 29 along the input shaft 21 and the output shaft 23 of the transmission 19 to shift the gear required by the rider (or by the electronic control in case of automatic transmission).

## Claims

1. A hybrid propulsion unit comprising:
- an internal combustion engine;
- an electric motor/generator;
- a transmission (19) comprising an input shaft (21) adapted to receive power from the electric motor/generator (41) and the internal combustion engine (15), and an output shaft (23) adapted to transmit power to a drive wheel (3);
- a clutch (33) adapted to cut off a power route between the internal combustion engine (15) and the input shaft (21) of the transmission (19);
- a mechanical connection (31) from the output shaft (23) of the transmission (19) to the drive wheel (3);
wherein the electric motor/generator (41) and the input shaft (21) of the transmission (19) are connected to each other via a mechanical connection configured to transmit power between the electric motor/generator (41) and the input shaft (21) of the transmission (19) under any operating condition of the hybrid propulsion unit (13); and wherein between the clutch (33) and the input shaft (21) of the transmission (19) a shift mechanism is provided, configured to:
a. mechanically couple an output of the clutch (33) to the input shaft (21) of the transmission (19) when the hybrid propulsion unit (13) operates in hybrid mode; and
b. mechanically decouple the output of the clutch (33) from the input shaft (21) of the transmission (19) when the hybrid propulsion unit (13) operates in electric mode.
wherein the shift mechanism is functionally coupled to a locking device (93) adapted to lock the transmission (19) in a fixed gear ratio when the hybrid propulsion unit (13) operates in electric mode.

2. The hybrid propulsion unit (13) of claim 1, wherein the shift mechanism comprises a gearwheel (37), supported idle on the input shaft (21) of the transmission (19), and an engaging member (38), torsionally coupled to the input shaft (21) of the transmission (19); and wherein the gearwheel (37) and the engaging member (38) are adapted to slide axially relative to each other along the input shaft (21) of the transmission (19), so as to be selectively torsionally coupled to, and decoupled from, each other.

3. The hybrid propulsion unit (13) of claim 2, wherein the engaging member (38) is slidingly coupled to the input shaft (21) of the transmission (19) and functionally coupled to an actuator (63) that controls a sliding movement of the engaging member (38) along the input shaft (21) of the transmission (19).

4. The hybrid propulsion unit (13) of claim 3, wherein the actuator (63) is connected to the engaging member (38) with the interposition of an elastic member (71, 73).

5. The hybrid propulsion unit (13) of any of the preceding claims, wherein the locking device (93) is controlled by a control unit.

6. The hybrid propulsion unit (13) of any of the preceding claims, wherein the transmission (19) is a manual transmission with a manual gear selector (91) of the transmission (19), and wherein the locking device (93) comprises a slider (94) that is mechanically coupled to the shift mechanism and adapted to take:
- a lock position, where the slider (94) is engaged with the manual gear selector (91) of the transmission (19), thus preventing the movement thereof, when the hybrid propulsion unit (13) operates in electric mode; and
- an unlock position, where the slider (94) is disengaged from the manual gear selector (91) of the transmission (19), thus allowing the motion thereof, when the hybrid propulsion unit (13) operates in hybrid mode.

7. The hybrid propulsion unit (13) of claim 6, wherein the slider (94) is elastically stressed by an elastic member (95) toward the unlock position and is constrained to an actuator (65) adapted to cause the slider (94) to move toward the lock position.

8. The hybrid propulsion unit (13) of claim 6 or 7, wherein the manual gear selector (91) comprises a hole (91.1), into which the slider (94) enters when in the lock position.

9. The hybrid propulsion unit (13) of claim 6, 7 or 8, wherein the manual gear selector (91) comprises a pedal or a lever.

10. The hybrid propulsion unit (13) of any of the preceding claims, comprising a gear train (47, 49, 51, 53) that connects the electric motor/generator (41) to the input shaft (21) of the transmission (19), wherein an end gear (53) of the gear train (47, 49, 51, 53) is torsionally coupled to the input shaft (21) of the transmission (19) so as to transmit motion from the electric motor/generator (41) to the input shaft (21) of the transmission (19).

11. The hybrid propulsion unit (13) of claim 10, wherein an intermediate gear (51) of the gear train (47, 49, 51, 53) is supported idle on an output shaft (33.2) of the clutch (33).

12. The hybrid propulsion unit (13) of any of the preceding claims, further comprising an electric starter motor (101) separate from the electric motor/generator (41).

13. The hybrid propulsion unit (13) of any of the preceding claims, wherein the electric motor/generator (41) is electrically connected to an accumulator (43) to receive electric power from the accumulator when the motor/generator (41) operates in motor mode and to charge the accumulator (43) by supplying electric power thereto when the motor/generator (41) operates in generator mode.

14. A motorcycle (1) comprising:
a frame (9);
at least one rear drive wheel (3);
at least one front steering wheel (5);
a saddle (11);
the hybrid propulsion unit (13) of one or more of the preceding claims, wherein the output shaft (23) of the transmission (19) is mechanically connected to the rear drive wheel (3).
